Europäisches Patentamt

European Patent Office

Office européen des brevets

(11) Publication number: **0 008 912**
**B1**

# EUROPEAN PATENT SPECIFICATION

(45) Date of publication of patent specification: **04.01.84**

(21) Application number: **79301729.4**

(22) Date of filing: **23.08.79**

(51) Int. Cl.³: **B 29 C 27/20,**
**F 16 L 55/16, H 01 R 4/70,**
**H 02 G 15/18**

(54) Heat shrinkable covers.

(30) Priority: **01.09.78 JP 106199/78**
**01.09.78 JP 106200/78**
**25.11.78 JP 161546/78 U**

(43) Date of publication of application:
**19.03.80 Bulletin 80/6**

(45) Publication of the grant of the patent:
**04.01.84 Bulletin 84/1**

(84) Designated Contracting States:
**BE DE FR GB IT**

(56) References cited:
**DE - A - 1 941 327**
**DE - A - 2 414 077**
**DE - B - 1 475 841**
**DE - B - 1 704 284**
**DE - B - 2 015 682**
**DE - B - 2 410 039**
**US - A - 3 235 289**
**US - A - 3 379 218**
**US - A - 3 770 556**
**US - A - 3 959 052**

(73) Proprietor: **UBE INDUSTRIES, LTD.**
**12-32, Nishimoto-cho 1-chome**
**Ube City, Yamaguchi Prefecture (JP)**

(73) Proprietor: **THE FURUKAWA ELECTRIC CO., LTD.**
**6-1, 2-chome, Marunouchi Chiyoda-ku**
**Tokyo (JP)**

(72) Inventor: **Nishimura, Hiroshi**
**22-16, Shinoharadai-machi, Kouhoku-ku**
**Yokohama City, Kanagawa Prefecture (JP)**
Inventor: **Monma, Tetsuo**
**835, Mutsukawa 1-chome, Minami-ku**
**Yokohama City, Kanagawa Prefecture (JP)**
Inventor: **Yoshida, Minoru**
**270, Shirahatamukai-machi, Kanagawa-ku**
**Yokohama City, Kanagawa Prefecture (JP)**
Inventor: **Kirimoto, Kazunari**
**967, Sakusabe-cho**
**Chiba City, Chiba Prefecture (JP)**
Inventor: **Hayamizu, Yoshio**
**44-3, Yamaki**
**Goi City, Chiba Prefecture (JP)**
Inventor: **Nagasawa, Toshio**
**27-36, Goryogashita-cho Fushimi-ku**
**Kyoto City, Kyoto Prefecture (JP)**
Inventor: **Kimura, Katsumi**
**44-3, Yamaki**
**Goi City, Chiba Prefecture (JP)**

Courier Press, Leamington Spa, England.

**0 008 912**

(74) Representative: **Burnside, Michael et al,**
**c/o Michael Burnside & Partners 2 Serjeants' Inn**
**Fleet Street**
**London EC4Y 1HL (GB)**

## Heat shrinkable covers

This invention relates to a heat shrinkable synthetic resin cover containing a heat generating element and adapted for use as an anticorrosion coating member applied to conduit joints, and a protective coating member for the joints of electric wires and cables.

Heat shrinkable synthetic resin covers have been widely used for protection against corrosion and mechanical impact on joints of natural gas or petroleum pipelines or joints of wires or cables.

For example, after applying a sheet or tube shaped heat shrinkable synthetic resin cover about a joint of steel pipes or electric wires or cables, the cover is heated from outside with the flame of a gas burner to cause the cover to heat shrink so as to cause it to tightly fit and adhere to the joints.

Examples of such heat shrinkable covers used at such joints are described in Japanese patent laid open specification No. 119,684 of 1977 (corresponding to U.S. Patent Application Serial No. 664,275 filed on March 5 1976) and U.S. Patent No. 3,086,242.

According to the prior art of coating a joint, when a heat shrinkable synthetic resin cover is applied about the joint, a suitable external source of heat was required to shrink the cover. When covering the joint with the heat shrinkable cover, unless the heat shrinkable cover is uniformly heated about the entire periphery there are such problems as non-uniform shrinkage causing air voids and uneven thickness of the cover. Although such coating operations are generally performed in the field, use of a heating furnace is not suitable for the field work so that in most cases gas burners have been used. With the gas burner it is generally difficult to heat uniformly all the periphery at the same time.

For example, when a heat shrinkable cover is wrapped about a joint of pipes having an outer diameter larger than one meter, the area of the cover heated at a time by a LPG gas burner is relatively narrow so that, it is impossible to uniformly heat the entire surface of the cover. In order to uniformly heat the entire surface, it is necessary to use a special multiple head burner or to simultaneously perform the heating operation with many skilled operators at the same time.

Where the field is in extremely cold areas or windy areas, it has been impossible to uniformly and simultaneously heat the entire surface of the heat shrinkable cover with external heating means. Nonuniform heating results in destruction of the cover due to overheating or an insufficient bonding between the joint and the cover thus forming an air gap therebetween or nonuniform wall thickness of the cover. Thus, as it is impossible to maintain the corrosion proof property as well as the protective property at the joints over a long period, and since nonuniform heating results in nonuniform residual stress in the coating the durability and weather proofness of the coated layer degrade thus making it impossible to use it over a long period.

Attempts have been made to overcome the problems mentioned above by embedding a heating member in a synthetic resin member. For instance, DE—A—2 414 077 discloses a heat shrinkable resin member containing a metal wire which can be heated by conduction from a heat source or by electrical resistance to bring about shrinkage of the resin member. Such an article however has certain practical disadvantages, including the inability of the wire (in a spiral or lattice portion) to shrink to the same extent as the resin member, so that the entire article is unable to shrink uniformly.

An alternative approach is shown by DE—A—1 941 327 which discloses a resin member in which is dispersed a conductive material such as carbon black. It is difficult to raise the temperature of such an article to a sufficient level, or to ensure an adequate and uniform shrinkage.

Accordingly, it is an object of this invention to provide a novel heat shrinkable synthetic resin cover containing an electric heater so that the cover can be uniformly heated from inside by passing electric current through the heater without using any external heating source.

Another object of this invention is to provide an improved heat shrinkable synthetic resin cover that can be applied readily in extremely cold regions, or to the joint of pipes having large diameter.

Still another object of this invention is to provide a heat shrinkable synthetic resin cover that can be uniformly heated and cause to shrink thus forming durable and weather proof covers.

A further object of this invention is to provide a sheet shaped shrinkable cover wherein the opposite ends of the cover wrapped about a joint can be firmly joined to each other.

According to this invention, there is provided a heat shrinkable synthetic resin cover having heat shrinkability in substantially one predetermined direction, and comprising a flexible electric heating member made of metal wire conductor embedded within a heat shrinkable synthetic resin member, characterized in that said metal wire conductor is coated with a cross-linked polymer having a gel fraction of from 20 to 60%, and extends continuously, crossing said cover repeatedly back and forth at from 60 to 90° with respect to said predetermined direction whereby to provide said heat shrinkability in said predetermined direction.

In one embodiment of the invention, said metal wire conductor is arranged in a zig-zag form to cross said predetermined direction of heat shrink of said heat shrinkable synthetic resin member.

In another embodiment, the heating member comprises a net shaped structure including a combination of a number of said polymer-covered metal wire conductors and a number of linear members of a thermoplastic resin extending substantially at right angles to said metal wire conductors and running substantially in said predetermined direction of heat shrink.

In another preferred embodiment, a rectangular flat sheet shaped heat shrinkable synthetic resin member is provided with at least two tongues extending along the entire length of one end edge of said member, said one end edge being substantially perpendicular to said predetermined direction of heat shrink.

Alternatively, a rectangular flat sheet shaped heat shrinkable synthetic resin member is provided with two tongues extending along the entire length of each end edge of said member, said end edges being substantially perpendicular to said predetermined direction of heat shrink, said conductor being contained in a body portion of said heat shrinkable synthetic resin member, one of said two tongues at one of said end edges, lying above the body portion and one of said two tongues at the other end edge lying below the body portion.

When the cover is applied to seal a joint between two pipes or electric cables, the tongues on the opposite end edges are superposed one upon the other to interconnect both end edges of the cover.

In the accompanying drawings:

Fig. 1 is a perspective view showing one embodiment of a sheet like heat shrinkable synthetic resin cover embodying the invention;

Fig. 2 is a perspective view of a cylindrical cover;

Figs. 3 and 4 are a plan view and a side view showing one example of the steps of manufacturing an electric heating element to be contained in the heat shrinkable synthetic resin cover of this invention;

Figs. 5 and 6 are perspective views showing electric heating elements to be contained in the heat shrinkable synthetic resin cover of this invention;

Fig. 7 is a perspective view showing a modified embodiment of the sheet like heat shrinkable synthetic resin cover embodying the invention; and

Fig. 8 is a side view of a sheet like heat shrinkable cover shown in Fig. 7 to be applied to a joint between steel pipes with the opposite ends of the cover bonded together.

A heat shrinkable synthetic resin member 12 comprising the heat shrinkable cover 10 of this invention should be a resinous shaped material shrinkable in substantially one direction and may be improved in heat resistant property at high temperatures and heat shrinkability. It is advantageous that the material is made of a cross-linked polymer. The heat shrinkable member 12 may be a crystalline synthetic resin film imparted with heat shrinkability substantially in one direction by a well known method. Especially in this invention, it is advantageous that the member 12 comprises a sheet comprising a cross-linked polymer for improving the heat resistant property.

The heat shrinkable crystalline synthetic resin film or sheet may be prepared by a conventional method comprising the steps of drawing a blank of the film in substantially one direction at an elevated temperature and then lowering the temperature under a tension load caused by the elongation so as to solidify the film with stress remaining in the film.

Heat resistant property of the film can be imparted by cross-linking a polymer comprising the film with a cross-linking agent or by causing a cross-linking by irradiating the polymer with electron beams or radioactive radiations. Such cross-linking reaction may be effected before or after the step of imparting the heat shrinkability to the film.

The heat shrinkable synthetic resin member 12 may comprise a single layer or a laminate which have been imparted with the heat shrinkability and heat resistance property in a manner described above.

The lamination may be prepared, for example, by tightly wrapping a film 12 which has been imparted with heat shrinkability and heat resistant property about a roller to a desired thickness, applying a shape holding tape or sheet about the lamination, and heating the assembly thereby fusing together all layers of the lamination.

The film utilized to prepare the heat shrinkable and heat resistant member may be made of a crystalline resin, but it is advantageous that the film is composed of a polymer having a gel fraction of 20 to 65%, preferably 25 to 60%, and selected from a group consisting of cross-linked ethylene polymers, for example, cross-linked polyethylene, cross-linked polyvinyl chloride, silicone rubbers, ethylene-propylene copolymer elastomers. It was found that films made of cross-linked polyethylene having a gel fraction of 30 to 50% are most suitable.

The term gel fraction used herein means weight percent of residual of 0.15 gr. of the sample after the extraction of 24 hours at 120°C with 30 ml. of xylene, and drying for more than 16 hours at 80°C.

The heat shrinkable synthetic resin member made of a cross-linked polymer having a gel fraction or a solvent unextractable fraction of less than 20% is not suitable because of its poor heat shrinkability and poor heat resistant property. With such a member it is not easy to obtain heat shrinkable covers that are uniform in thickness, and do not break when exposed to high temperature. Films made of polymers having a gel fraction of larger than 65% was also found to be unsuitable because of their poor bonding force between the layers when a lamination of the heat shrinkable synthetic resin members is formed.

As above described, the heat shrinkable film is prepared by drawing the blank in one direction at high temperature and then cooling the elongated film, and such film has sufficiently heat shrinkability substantially in one or inherent direction so that it is suitable to prepare the heat shrinkable member of this invention. When laminating such films care should be taken to align the direction of shrinking (inherent direction of heat shrink P) of respective films for the purpose of ensuring a heat shrinkable member which shrinks substantially in only one direction when heated.

In the following description, the direction in which the films manifest a maximum heat shrinkability in the same direction as their direction of elongation is designated as a direction P of inherent heat shrink.

According to this invention the heat shrinkable synthetic resin cover 10 contains therein an electric heater 13 comprising a flexible conductor coated with a cross-linked polymer. Use of a cross-linked polymer is advantageous because it can maintain the electric conductor in good insulated state when a high temperature is applied to laminate the electric heater 13 with heat shrinkable synthetic resin members 12 and when a high temperature is applied by means of a current passing through terminals 14 to heat shrink the heat shrinkable cover 10 after it has been applied to a joint between pipes or cables.

The cross-linked polymer may be formed by cross-linking thermoplastic resins, for example, ethylene polymers, polypropylene, polyvinyl chloride, ethylene-propylene polymers with electron beams or radioactive radiations or chemical cross-linking agents, for example peroxides or suitable curing agents. The cross-linking reaction may be performed before or after coating the conductor with the thermoplastic resin.

The degree of cross-linking of the thermoplastic resin utilized to insulate the conductor is 20—60%, preferably 25—55%, more preferably 30—45% in terms of the gel fraction. It was found that a cross-linked polyethylene having a gel fraction of 25—55%, is most suitable to insulate the conductor.

When the gel fraction of the cross-linked polymer is higher than 60%, and when the insulated conductor is inserted between two heat shrinkable synthetic resin members 12 in a manner to be described later, it is difficult for the insulated conductor to be fused with the members 12 to form an integral structure. On the other hand, when the gel fraction is lower than 20%, the heat resistant property of the cross-linked polymer is not sufficient and it melts to flow so as to make the short circuit between the conductors.

The flexible conductor may be a fine metal wire or strands thereof which can generate heat when current flows therethrough. Fine copper wire or strands thereof are most suitable, but wires of copper alloys or nickel alloys can also be used depending upon the manner of heat shrink.

Use of a flexible conductor insulated with a cross-linked polymer as the electric heater 13 constitutes one of important features of this invention.

One of the advantages lies in that the flexibility of the conductor permits it to distribute at a desired uniform density in the heat shrinkable synthetic resin cover 10 irrespective of the shape of the conductor. Furthermore, the flexibility of the conductor assures the flexibility of the heat shrinkable synthetic resin cover 10 both at room temperature and at elevated temperature.

Where a bare conductor not coated with a cross-linked polymer is used as an electric heater, when heat is applied to the inserted conductor to embedded in a lamination of the heat shrinkable synthetic resin members or to cause the heat shrinkable cover to shrink about the joint, the bare conductor tends to move at the time of the heat shrink thus causing adjacent turns to contact or overlap each other thus causing short circuiting or breakage of the wire. If such fault occurs, a portion or all of the conductor can not pass current thus causing non-uniform heat shrink of the cover 10.

In contrast, according to this invention, since the conductor is coated with a cross-linked polymer, the conductor will not be displaced to cause short circuit or breakage when heat is applied to the laminated heat shrinkable members 12 or to the heat shrinkable cover.

Even when the cross-linked polymer utilized to insulate the conductor is heated to a temperature higher than the melting point of the polymer for causing the cover 10 to heat shrink, the coated polymer would not melt because its heat resistance property has been increased due to the cross-linking reaction. Accordingly, variation in the thickness of the coated polymer is small thus making it possible to complete the heat shrink in a short time and at a high temperature.

Where a cross-linked polyethylene having a gel fraction of 30—45% is used to insulate the conductor the cross-linked polymer adheres well to the heat shrinkable synthetic resin members when they are laminated thus preventing formation of air voids in the lamination whereby it is possible to provide an integral homogeneous lamination having a high heat resistant property.

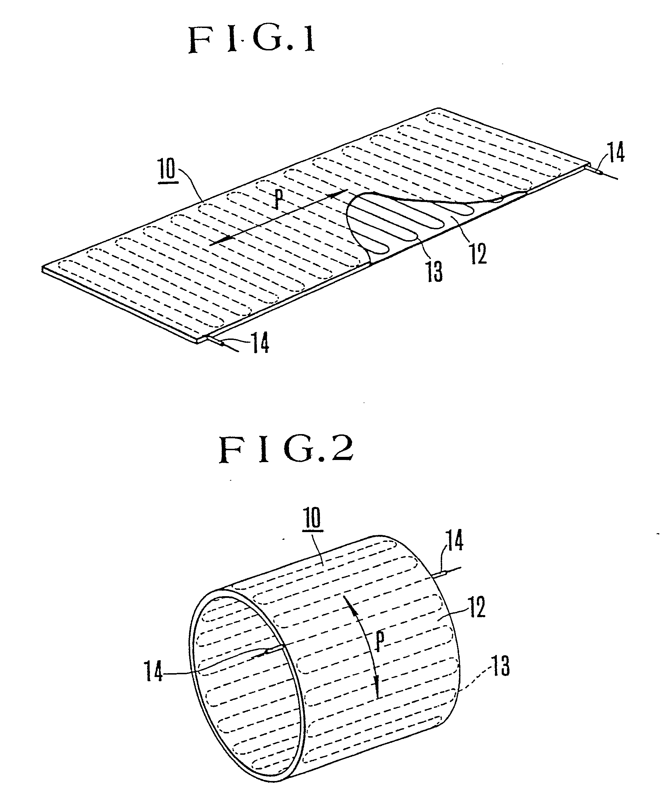

As shown in Figs. 1 and 2, the flexible electric heater 13 should be contained throughout the heat shrinkable cover 10 such that the electric heater should not prevent the heat shrink of the heat shrinkable members 12 in its inherent direction of heat shrink P.

The flexible heater 13 may be contained in various manners in the heat shrinkable cover 10, crossing the inherent direction P in which the maximum heat shrink of the members 12 occurs.

It is advantageous to arrange the conductor to cross the inherent direction P of heat shrinkage of the members 12 at substantially right angles with a spacing of 0.3—2 cm, preferably 0.4—1 cm. between adjacent turns.

To dispose a continuous and long conductor between the heat shrinkable members 12 it is desirable to change the direction of the conductor, that is to reverse its direction in the inside or outside at both sides of the heat shrinkable members 12. When the direction of the conductor is reversed on the outside of both sides, sufficient heating is performed at both sides just in the same manner as at the central portion.

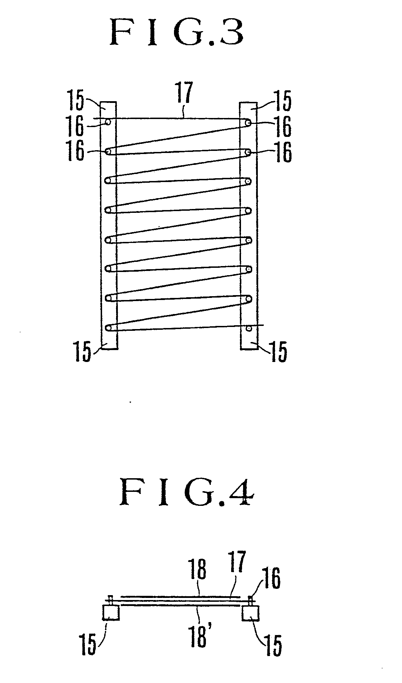

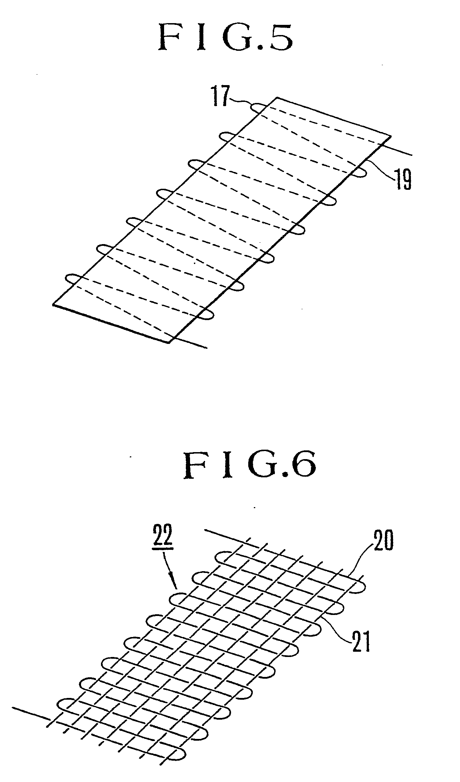

To prepare the heat shrinkable cover 10 of this invention containing the flexible heating member arranged between the heat shrinkable members 12 in a manner as above described, the heating member is firstly prepared by repeatedly passing a flexible resistance wire 17 coated with a cross-linked polymer successively about a plurality of suitably spaced pins 16 secured to a pair of parallel bars 15 as shown in Fig. 3. Then, a pair of synthetic resin films 18 and 18' are placed on both sides of the conductor as shown in Fig. 4. Thereafter, the synthetic resin films 18 and 18' are heated together to form a unitary sheet 19 shown in Fig. 5 in which zig-zag shaped conductor is securely held. Then, the sheet 19 is clamped between heat shrinkable synthetic resin members 12 and heated to form an integral lamination.

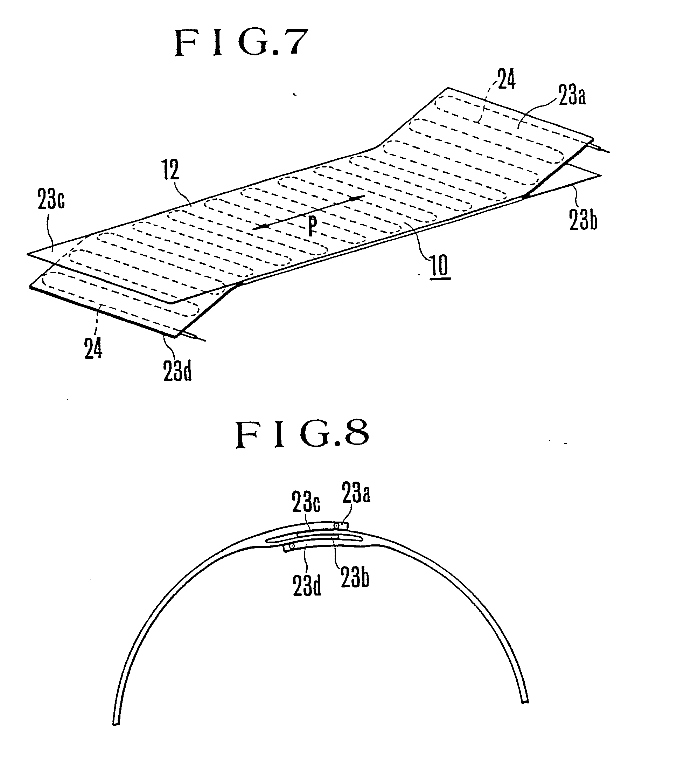

Fig. 6 shows a net shaped heat element for manufacturing the heat shrinkable cover 10.

Thus, a flexible resistance wire 20 coated with a cross-linked polymer is suitably combined with linear members 21 (for example, strings or cords) of a thermoplastic resin so as to form a wire net member 22, as shown in Fig. 6, with the conductor utilized as wefts and the other as the warps. Then the wire net member 22 is clamped between the heat shrinkable members 12 and then heated to form an integral lamination.

As above described, when disposing the sheet 19 or wire net member 22 between the heat shrinkable synthetic resin members 12 for the purpose of preparing the heat shrinkable cover 10, care should be taken such that the resistance wire 17 or 20 of the sheet 19 or wire net member 22 would not extend in parallel with the direction of heat shrinkage P of the members 12 but intersects the direction of heat shrinkage P.

If the heating member 13 comprises a single long conductor, the resistance would become too high to permit the flow of current necessary to generate sufficient heat, so that it is desirable to divide the conductor into a plurality of sections and connect them in parallel.

The heat shrinkable cover 10 containing a heating member 13 is provided with at least one pair of terminals extending to the outside of the cover to pass electric current through the conductor. As above described, where the conductor is divided into a plurality of sections which are connected in parallel, a corresponding member of the terminal pairs are provided.

The heat shrinkable cover 10, that is the heat shrinkable member 12 may have any desired configuration so long as they can accommodate the heating member 13 in a prescribed manner. The heat shrinkable members 12 are preferred to have a rectangular sheet or tabular form because of their easiness of manufacturing and application to a joint between pipes or cables. Especially, heat shrinkable cover 10 (Fig. 1) comprising flat sheet shaped heat shrinkable synthetic resin members 12 is easy to wrap about joints between large diameter steel pipes already installed.

It is advantageous to apply a suitable bonding agent to one surface of the heat shrinkable cover 10 which is to be brought into contact with the joint for increasing the bonding force between the cover and the pipes or cables. As the bonding agents may be mentioned pressure sensitive bonding agents and heat sensitive bonding agents.

Preferably, the thickness of the heat shrinkable cover 10 of this invention may be about 0.5 to 5 mm.

Where the heat shrinkable members take the form of flat rectangular sheets it is advantageous to provide at least two tongues 23a—23d (not bonded portions) at at least one end edge of the heat shrinkable cover 10 which extends preferably at right angles with respect to the direction of heat shrink P, such tongues being used to firmly bond together overlapped ends of the cover 10 when it is wrapped about a joint between steel pipes or cables.

In the example shown in Fig. 7, the opposite end edges of shrinkable synthetic resin members 12 have diverged tongues 23a—23d which are to be superposed one upon another as shown in Fig. 8 to reinforce the junction of the cover. It is advantageous to apply a suitable bonding agent onto the inner surfaces of the tongues.

Where the heating element 13 is uniformly contained in the tongues and body portion of the heat shrinkable members 12 and in one of the tongues on the opposite ends, for example in tongues 23a and 23d, after the cover 10 has been wrapped about the joint and after the tongues have been superposed one upon another as shown in Fig. 8, passage of current through the heating element 13 not only causes the cover 10 to heat shrink but also causes firm bonding of the tongues. When wrapping the heat shrinkable cover as above described the tongues should be overlapped such that tongues 23a and 23d each containing the heating element 13 would be located at the innermost or outermost positions (see Fig. 8).

A heat shrinkable cover 10 provided with tongues at the opposite ends can be prepared as follows:

While a heat shrinkable film is wrapped about a drum, not shown to form a lamination, the sheet shaped or wire net shaped heating elements are interposed between predetermined turns of the lamination and release paper strip is also interposed between the predetermined turns. After wrapping, the assembly is heated to obtain an integral cylindrical lamination and then the cylindrical lamination is cut at the portions where the release paper strip had been interposed.

Some examples of the method of preparing the heat shrinkable cover of this invention will now be described in the following.

### Example 1

7 copper wires each having a diameter of 0.10 mm were twisted together and a polyethylene coating was applied onto the strand to obtain an insulated electric wire having an outer diameter of 0.65 mm. The electric wire was then irradiated with electron beams to effect a cross-linking reaction of the coated polyethylene to a degree of 38% gel fraction.

The electric wire 17 coated with the cross-linked polyethylene was then successively passed, in a zig-zag form, about a plurality of pins 16 mounted on a pair of parallel bars 15 spaced 700 mm from each other as shown in Fig. 3, the spacing between adjacent pins being about 5 mm. Then, cross-linked polyethylene films 18 and 18' were placed on both sides of the zig-zag shaped resistance wire 17 to temporarily hold the electric wire by the edges of the cross-linked polyethylene films 18 and 18' to obtain a sheet 19 as shown in Fig. 5 in which the electric wire is distributed uniformly.

Each one of the films 18 and 18' utilized at this time had a thickness of 0.15 mm, a width of 680 mm, a gel fraction of 48% and percentage of shrinkage of 40%. Then four turns of the heat shrinkable synthetic resin film with one turn of release paper, not shown, were wrapped about a mandrel having a diameter of 650 mm. The synthetic resin film was made of a cross-linked polyethylene film having a width of 680 mm, a gel fraction of 48% and percentage of shrinkage of 40%. Thereafter, one layer of the sheet 19 containing the electric wire was applied, and then 6 turns of the above described synthetic resin film were wrapped on the sheet 19 under pressure. The stack was then placed in a thermostatic tank, not shown, and heated at 180°C for 40 minutes thereby fusing together adjacent turns.

During the heating, the films constituting the heat shrinkable cover of this invention are pressed together, and release papers and cloth tapes were sequentially wrapped on the uppermost layer under pressure so as to prevent undesirable shrinkage. Thereafter, the assembly was cooled to room temperature and the mandrel was removed thus obtaining a tube of the heat shrinkable synthetic resin cover having an inner diameter of 635 mm and containing a tape shaped heating member.

After mounting the cover tube on a steel pipe having an outer diameter of 650 mm the coated wire was divided into 6 sections to expose the conductors at the bent back portions between the divided sections to provide taps for connecting in parallel the divided sections. Current of 55A was passed under 120V through the parallel connected wires. Of course the electric wire was divided such that respective sections would have the same resistance value. Otherwise currents flowing through respective sections would become unequal thus failing to produce uniform heating. The cover tube thus prepared completely and uniformly shrink within 5 minutes and strongly adhered to the steel pipe.

### Example 2

7 copper wires, each having a diameter of 0.1 mm were twisted together and the resulting strand was coated with a polyethylene to form a coated electric wire having an outer diameter of 0.65 mm. The coated wire was then irradiated with electron rays or radioactive radiations to form a cross-linked structure having a gel fraction of 42%.

Then a wire net structure or a matrix shaped structure as shown in Fig. 6 was obtained by using the cross-linked polyethylene coated wires 20 as the wefts, and polyethylene strings 21 as the warps, the pitches between adjacent warps and wefts being 5 mm respectively. A single and continuous coated wire 20 was used. The warps 21 may be constituted by a single continuous strand like the wefts or may be independent of with each other.

Then four turns of a cross-linked polyethylene film having a gel fraction of 48%, a thickness of 0.15 mm, and a percentage of shrinkage of 35% were formed on a mandrel which can reduce its diameter having an outer diameter of 1500 mm. The polyethylene film had an inherent direction of heat shrink P extending in the longitudinal direction of the film. The one turn of the wire net shaped structure 22 was applied to the polyethylene film such that the parallel portions of the coated wire would be at right angles with respect to the direction of heat shrink P of the cross-linked polyethylene film.

Then a cross-linked film is again applied onto the wire net shaped structure 22. The lamination thus formed was put into a thermostatic tank and heated for 40 minutes at a temperature of 200°C to fuse together successive turns to each other. After cooling the mandrel was removed to obtain a tube of a heat shrinkable synthetic resin cover. The tube had a configuration similar to that shown in

**0 008 912**

Fig. 2. In the tube thus obtained the polyethylene covering the electric conductor and the polyethylene strings were completely fused together and became integral with the cross-linked polyethylene film without forming any void between adjacent elements.

After mounting the cover tube on a steel pipe having an outer diameter of 1450 mm, the coated electric wire was divided into 12 equal sections which were connected in parallel and passed with current of 110A for about 5 minutes under a voltage of 120V. As a result, the cover tube was uniformly shrunk along the entire periphery thus firmly fitted to the steel tube without forming any burnt portions.

Example 3

The cross-linked polyethylene coated electric wire used in Example 2 was substituted by a strand of 17 soft copper wires each having a diameter of 0.08 mm and coated with a baked polyurethane enamel, and a cover tube was prepared under the same conditions as in Example 2. Again, the polyurethane coating, the polyethylene strands and the cross-linked polyethylene film were perfectly integrated together without forming any voids. The cover tube prepared in this manner was heated by the heating element to uniformly heat shrink around the entire periphery.

Example 4

16 copper wires each having a diameter of 0.08 mm were twisted together and the strand was coated with polyethylene to obtain a coated electric wire, which was then irradiated with electron beams to obtain an electric wire coated with a cross-linked polyethylene having a gel fraction of 39%. The coated wire was then arranged in a zig-zag form with a jig shown in Fig. 3 and then clamped between cross-linked polyethylene films each having a thickness of 40 microns and a gel fraction of 21%. Then the assembly was heat fused to form a long sheet having a width of about 700 mm and a length of about 2200 mm. This sheet was used as the heating element and was provided with intermediate taps to divide it into 12 sections which were connected in parallel.

A long cross-linked polyethylene film having a thickness of 150 microns, a width of 750 mm, and a gel fraction of 41% was drawn to be imparted with heat shrinkability. The film was then wrapped about a mandrel having an outer diameter of 700 mm to form seven turns. Then, the long heating element was wrapped and seven turns of the heat shrinkable film were formed thereon. Thus, the heating element was interposed between the 7th and the 8th turns of the total of 14 turns of the heat shrinkable film. Then a heat resistant cloth tape was applied to bind the turns. Thereafter, the assembly was heated to about 180°C for 30 minutes to fuse together the turns. Then, the lamination was dismounted from the mandrel to obtain a heat shrinkable tube containing a heating wire. Then, a synthetic rubber type adhesive consisting essentially of EPR was coated onto the inner surface of the tube. The adhesive was in the form of a long sheet having a thickness of 1 mm and bonded with a release paper. The sheet of the adhesive was bonded to the inner surface of the tube by applying pressure with a roller with the surface of the adhesive accompanied with the release paper.

After mounting the tube on a steel pipe having an outer diameter of 600 mm, the release papers were removed and current of 95A was passed through the heating element from a constant current source. After 5 minutes heat shrink was commenced and after 9 minute the tube was completely shrunk. Thereafter the current was reduced to 85A and this reduced current was passed for about 15 minutes to completely melt the bonding agent to fill the gap between the heat shrinkable tube and the steel tube. Then, the current was interrupted and the assembly was cooled. It was found that the bonding between the steel pipe and the heat shrinkable tube was perfect.

Example 5

Cross-linked polyethylene films each having a thickness of 150 microns, a width of 700 mm and a length of 1950 mm were laminated one upon another and heat fused. A coated wire comprising a strand of 16 copper wires each having a diameter of 0.08 mm was interposed at the predetermined turn of the lamination to obtain a cover having tongues at the opposite ends as shown in Fig. 7. The coated wire was divided into 6 sections with taps between adjacent sections thus connecting in parallel the divided sections. Each end section of the heating wire extends through both of one tongue in the opposite ends and the main body of the synthetic resin member. Further, such sections have same resistance value each another.

The resulting cover was wrapped about a steel pipe having an outer diameter of about 610 mm, and two tongues at the opposite ends were superposed one upon another as shown in Fig. 8 and an adhesive tape was applied onto the laminated tongues to temporarily hold them. Then current was passed through the parallelly connected sections to cause the cover to heat shrink. After stopping the current, the cover was cooled and the joint of the cover was cut and examined. It was noted that the adhesive applied to respective tongues was melted to completely fill the gaps between the tongues for integrally bonding them. Also the bonding agent applied to the main body of the cover flowed to form a water tight sealing between it and the steel tube.

As a control, a sample in which an electric heater was embedded in tongue 23b instead of tongue 23a was tested. It was noted that, considerably before the temperature of body portion was reached the desired temperature, tongues 23b and 23c were overheated to cause the bonding agent flow out or the tongues undergo pyrolysis thus failing to obtain perfect and strong joint.

It should be noted that the invention is not limited to the specific examples described above and that many changes and modifications would be obvious to one skilled in the art. For example, in addition to the joints between pipes or cables, the heat shrinkable synthetic resin cover of this invention can also be used to reduce the size of an opening of a pipe or to prevent an electric cable or wire from contacting other member.

## Claims

1. A heat shrinkable synthetic resin cover (10) having heat shrinkability in substantially one predetermined direction (P), and comprising a flexible electric heating member (13) made of metal wire conductor (17) embedded within a heat shrinkable synthetic resin member (12), characterized in that said metal wire conductor (17) is coated with a cross-linked polymer having a gel fraction of from 20 to 60%, and extends continuously, crossing said cover repeatedly back and forth at from 60 to 90° with respect to said predetermined direction (P), whereby to provide said heat shrinkability in said predetermined direction.

2. A heat shrinkable synthetic resin cover according to Claim 1, characterized in that said metal wire conductor (17) is arranged in a zigzag form to cross said predetermined direction (P) of heat shrink of said heat shrinkable synthetic resin member (12).

3. A heat shrinkable synthetic resin cover according to Claim 1 characterized in that said heating member (13) comprises a net shaped structure (22) including a combination of a number of said polymer-covered metal wire conductors (17) and a number of linear members of a thermoplastic resin (21) extending substantially at right angles to said metal wire conductors (17) and running substantially in said predetermined direction of heat shrink (P).

4. A heat shrinkable synthetic resin cover according to any of Claims 1 to 3, characterized in that a rectangular flat sheet shaped heat shrinkable synthetic resin member is provided with at least two tongues (23a, 23b), (23c, 23d) extending along the entire length of one end edge of said member, said one end edge being substantially perpendicular to said predetermined direction of heat shrink (P).

5. A heat shrinkable synthetic resin cover according to any of Claims 1 to 3 characterized in that a rectangular flat sheet shaped heat shrinkable synthetic resin member is provided with two tongues (23a, 23b), (23c, 23d) extending along the entire length of each end edge of said member, said end edges being substantially perpendicular to said predetermined direction of heat shrink (P), said conductor (17) being contained in a body portion of said heat shrinkable synthetic resin member (12), one of said two tongues (23a) at one of said end edges, lying above the body portion and one of said two tongues (23d) at the other end edge lying below the body portion.

## Revendications

1. Un revêtement (10) en résine synthétique thermorétractable présentant une thermorétractivité dirigée sensiblement dans une direction prédéterminée P et comprenant un organe de chauffage électrique souple (13) constitué par un fil métallique conducteur (17) noyé à l'intérieur d'un organe (12) en résine synthétique thermorétractable, caractérisé en ce que ledit fil métallique conducteur (17) est revêtu au moyen d'un polymère à liaisons croisées ou réticulé présentant une partie gélifiable ou colloïdale comprise entre 20 et 60%, et s'étend de façon continue à travers ledit revêtement successivement d'avant en arrière en formant un angle de 60 à 90° par rapport à ladite direction prédéterminée P, grâce à quoi est obtenue ladite thermorétractivité dans ladite direction prédéterminée.

2. Revêtement en résine synthétique thermorétractable selon la revendication 1 caractérisé en ce que ledit fil métallique conducteur (17) est disposé sous la forme d'un zigzag croisant ladite direction prédéterminé P de thermorétractivité dudit organe (12) en résine synthétique thermorétractable.

3. Revêtement en résine synthétique thermorétractable selon la revendication 1, caractérisé en ce que ledit organe de chauffage (13) comprend une structure (22) formée en réseau comprenant une combinaison d'un nombre de fils métalliques conducteurs (17) recouverts dudit polymère et un nombre d'organes linéaires d'une résine thermoplastique (21) s'étendant sensiblement à angle droit avec lesdits fils métalliques conducteurs (17) et s'étendant sensiblement dans ladite direction prédéterminée P de thermorétraction.

4. Un revêtement de résine synthétique thermorétractable selon l'une quelconque des revendications 1 à 3 caractérisé en ce qu'un organe en résine synthétique thermorétractable en forme de feuille plane rectangulaire est prévu comportant au moins deux languettes (23a, 23b), (23c, 23d) s'étendant selon toute la longueur d'un bord d'extrémité dudit organe, ledit bord d'extrémité étant sensiblement perpendiculaire à ladite direction prédéterminée P de thermorétraction.

5. Revêtement en résine synthétique thermorétractable selon l'une quelconque des revendications 1 à 3 caractérisé en ce qu'un organe en résine synthétique thermorétractable en forme de feuille plane rectangulaire est prévu comportant deux languettes (23a, 23b), (23c, 23d) s'étendant selon toute la longueur de chaque bord d'extrémité dudit organe, lesdits bords d'extrémité étant sensiblement perpendiculaires à ladite direction prédéterminée P de thermorétraction, ledit conducteur (17) étant contenu dans une partie de corps dudit organe (12) en résine synthétique thermorétractable, l'une desdites deux languettes (23a) à l'endroit d'un desdits bords d'extrémité s'étendant par dessus la partie de corps et l'une desdites deux lauguettes (23d) à l'autre bord d'extrémité s'étendant par dessous la partie de corps.

## Patentansprüche

1. Wärmeschrumpfbarer Kunstharzmantel (10), der in im wesentlichen einer vorbestimmten Richtung (P) wärmeschrumpfbar ist und ein biegsames elektrisches Heizglied (13) aus einem metallischen Drahtleiter (17) umfaßt, der in ein wärmeschrumpfbares Kunstharzteil (12) eingebettet ist, dadurch gekennzeichnet, daß der metallische Drahtleiter (17) mit einem vernetzten Polymer mit einem Gelanteil von 20 bis 60% umhüllt ist und kontinuierlich verläuft, wobei er den Mantel wiederholt hin und her gehend unter 60 bis 90 Grad zu der vorbestimmten Richtung (P) kreuzt, wodurch die Wärmeschrumpfbarkeit in der vorbestimmten Richtung geschaffen wird.

2. Wärmeschrumpfbarer Kunstharzmantel nach Anspruch 1, dadurch gekennzeichnet, daß der metallische Drahtleiter (17) in Zickzackform angeordnet ist und die vorbestimmte Richtung (P) der Wärmeschrumpfung des wärmeschrumpfbaren Kunstharzteils (12) kreuzt.

3. Wärmeschrumpfbarer Kunstharzmantel nach Anspruch 1, dadurch gekennzeichnet, daß das Heizglied (13) eine netzförmige Struktur (22) aufweist, die eine Kombination einer Anzahl der Polymer-umhüllten metallischen Drahtleiter (17) und einer Anzahl geradliniger Teile eines thermoplastischen Harzes (21) umfaßt, die sich im wesentlichen in rechten Winkeln zu den metallischen Drahtleitern (17) erstrecken und im wesentlichen in der vorbestimmten Richtung der Wärmeschrumpfung (P) verlaufen.

4. Wärmeschrumpfbarer Kunstharzmantel nach einem der Ansprüche 1 bis 3, dadurch gekennzeichnet, daß ein rechteckiges flaches blattförmiges wärmeschrumpfbares Kunstharzteil mit mindestens zwei Zungen (23a, 23b), (23c, 23d) versehen ist, die sich entlang der gesamten Länge eines Endrandes des Teiles erstrecken, wobei dieser Endrand im wesentlichen senkrecht zur vorbestimmten Richtung der Wärmeschrumpfung (P) verläuft.

5. Wärmeschrumpfbarer Kunstharzmantel nach einem der Ansprüche 1 bis 3, dadurch gekennzeichnet, daß ein rechteckiges flaches blattförmiges wärmeschrumpfbares Kunstharzteil mit zwei Zungen (23a, 23b), (23c, 23d) versehen ist, die sich entlang der gesamten Länge jedes Endrandes des Teiles erstrecken, wobei diese Endränder im wesentlichen senkrecht zur vorbestimmten Richtung der Wärmeschrumpfung (P) verlaufen, der Leiter (17) sich in einem Körperteil des wärmeschrumpfbaren Kunstharzteils (12) befindet, eine der zwei Zungen (23a) an einem der Endränder sich über dem Körperteil befindet und eine der zwei Zungen (23d) am anderen Endrand unterhalb des Körperteils angeordnet ist.

# F I·G.1

# F I G.2

# F I G.3

# F I G.4

# F I G.5

# F I G.6

# F I G.7

# F I G.8